# EUROPÄISCHE PATENTSCHRIFT

(11) **EP 1 061 328 B1**
(45) Veröffentlichungstag und Bekanntmachung des Hinweises auf die Patenterteilung: **17.12.2008**
(21) Anmeldenummer: 00112107.8
(22) Anmeldetag: 06.06.2000
(51) Int. Cl.: G01B 7/00, G01B 7/012

(54) **Verfahren und Schaltkreis zur Einstellung einer Schaltschwelle eines Tastschalters**
Method and switching circuit for tuning a switching threshold of a switch sensor
Méthode et circuit de commutation pour régler le seuil de commutation d'un palpeur commutateur

(30) Priorität: 18.06.1999 DE 19929557
(43) Veröffentlichungstag der Anmeldung: 20.12.2000
(73) Patentinhaber: Dr. Johannes Heidenhain GmbH, 83292 Traunreut (DE)
(72) Erfinder: Ritz, Franz, 83236 Übersee (DE)

(56) Entgegenhaltungen:
- EP-A- 0 388 993
- EP-A- 0 501 680
- DE-A- 2 726 981
- DE-A- 2 827 868
- DE-A- 4 330 873
- DE-A- 4 422 867
- DE-A- 19 525 592
- US-A- 5 576 619
- PATENT ABSTRACTS OF JAPAN vol. 1998, no. 07, 31. März 1998 (1998-03-31) & JP 08 043123 A (DEUTSCHE ITT IND GMBH), 16. Februar 1996 (1996-02-16)

## Beschreibung

Die Erfindung betrifft ein Verfahren und einen Schaltkreis zur Einstellung einer Schaltschwelle eines Tastschalters nach dem Oberbegriff des Anspruches 1 bzw. des Anspruches 9.

Aus der EP 0 501 680 B1 ist ein Schaltkreis für einen Tastschalter (Tastsystem) mit einem auslenkbaren Tastelement bekannt, der bei einer Auslenkung des Tastelementes aus seiner Ruheposition ein Schaltsignal abgibt. Derartige Tastschalter werden zur Positionsbestimmung von Werkstücken verwendet, die in Material bearbeitende Maschinen, insbesondere Fräsmaschinen, eingespannt sind.

Unter der Ruheposition des Tastelementes wird eine Position des Tastelementes verstanden, in der es noch keinen Kontakt mit einem Werkstück hat. Erst bei Kontakt des Tastelementes mit dem Werkstück wird das Tastelement aus seiner Ruheposition bewegt.

Zur Ermittlung, ob das Tastelement aus seiner Ruheposition ausgelenkt wurde, wird eine Spannung gemessen, die über im Tastschalter angeordneten Kontakten abfällt. Beim Auslenken des Tastelementes aus seiner Ruheposition bewirkt der Tastschalter eine Änderung der über den Kontakten abfallenden Spannung. Wenn die Spannung eine vorgegebene Schaltschwelle überschreitet, gibt der Tastschalter ein Schaltsignal ab.

Des weiteren weist der bekannte Tastschalter Mittel auf, mit denen die Schaltschwelle nach einer Auslenkung und Rückkehr des Tastelementes in dessen Ruheposition neu eingestellt wird. Dies ist deshalb notwendig, da das Tastelement aufgrund von Materialverschleiß und Einwirkung von Feuchte und Temperatur nach einer Auslenkung aus seiner Ruheposition nicht immer in die ursprünglich eingenommene Ruheposition zurückkehrt, sondern eine von der ursprünglich eingenommenen Ruheposition geringfügig abweichende Position einnimmt, also eine neue Ruheposition. Ohne neue Einstellung der Schaltschwelle würde der Schaltkreis hier immer ein Schaltsignal erzeugen, obwohl das Tastelement keinen Kontakt mehr mit dem Werkstück hat. Die Schaltschwelle wird daher bei Einnahme der neuen Ruheposition auf einen Wert eingestellt, der dem über den Kontakten abfallenden Widerstand bzw. Spannung an der neuen Ruheposition des Tastelementes entspricht.

Bei dem bekannten Tastschalter ist allerdings von Nachteil, daß eine während der Einstellung der Schaltschwelle erfolgende Auslenkung des Tastelementes nicht detektierbar ist, da die Einstellung der Schaltschwelle von einem auf einen anderen Wert durch Übernahme eines Momentanwertes erfolgt. Geringfügige Änderungen der gemessenen Spannung, die aufgrund einer geringen Auslenkung des Tastelementes bewirkt werden, sind daher mit dem bekannten Tastschalter während einer gleichzeitigen Einstellung der Schaltschwelle nicht detektierbar. Zudem können Schwingungen der Maschine, in die der Tastschalter eingesetzt ist, den bekannten Tastschalters beeinflussen, so daß es zu einer falschen Einstellung der Schaltschwelle kommt und eine ordnungsgemäße Funktion des Tastschalters nicht gewährleistet ist.

In der DE 195 25 592 A1 ist ein Verfahren zur exakten Bestimmung des Antastzeitpunktes eines Tastschalters beschrieben, um in einem definierten Zeitraum vor einer jeweiligen Antastung eine dynamische Trägerschwelle neu einstellen zu können, indem die dynamische Trägerschwelle auf den doppelten Wert der in jenem Zeitraum gefundenen maximalen Rauschamplitude gesetzt wird.

Aus der DE 44 22 867 A1 sind ein Sensor mit einer programmierbaren Schaltschwelle und ein Verfahren zum Programmieren der Schaltschwelle eines solchen Sensors bekannt, wobei ein aufgrund einer vorgegebenen Messgröße erzeugtes Messausgangssignal des Sensors mit einem sich in Schritten ändernden Referenzsignal, insbesondere einem Stromsignal, verglichen wird, und wobei dem jeweiligen Wert des Referenz- bzw. Stromsignals ein Code zugeordnet wird und derjenige Code gespeichert wird, bei welchem das Referenz- bzw. Stromsignal dem Ausgangssignal entspricht.

Der vorliegenden Erfindung liegt daher die Aufgabe zugrunde, ein Verfahren und einen Schaltkreis anzugeben, die eine genaue und störungsfreie Einstellung der Schaltschwelle eines Tastschalters (Tastsystems) gewährleisten.

Diese Aufgabe wird erfindungsgemäß mit einem Verfahren mit den Merkmalen des Anspruchs 1 gelöst. Ein erfindungsgemäßer Schaltkreis, zur Durchführung des erfindungsgemäßen Verfahrens, wird durch die Merkmale des Anspruchs 9 charakterisiert.

Danach wird bei dem erfindungsgemäßen Verfahren zur Einstellung einer Schaltschwelle eines Tastschalters, der ein aus einer Ruheposition auslenkbares Tastelement aufweist und der bei einer Auslenkung des Tastelementes aus seiner Ruheposition eine definierte Änderung eines meßbaren Systemparameters bewirkt und ein Schaltsignal abgibt, wenn der Systemparameter die Schaltschwelle überschreitet, die Schaltschwelle aus einem in Stufen veränderbaren Referenzwert bestimmt. Dieser Referenzwert wird zu vorgebbaren Zeitpunkten mit dem Wert des Systemparameters in der Ruheposition des Tastelementes verglichen und um jeweils eine Stufe diesem Wert des Systemparameters nachgeführt, falls der Referenzwert von diesem Wert des Systemparameters abweicht.

Dabei wird unter dem in Stufen veränderbaren Wert ein Wert verstanden, der immer nur um einen vorgebbaren Wert, nämlich einer Stufe, erhöht oder erniedrigt werden kann. Insbesondere wird der in Stufen veränderbare Referenzwert durch ein digitales Signal gebildet.

Unter dem Tastschalter wird ein Tastsystem verstanden, das als wesentliche Bestandteile ein Tastelement sowie Mittel zur Erzeugung eines Schaltsignales aufweist.

Bei dem erfindungsgemäßen Verfahren erfolgt die Einstellung der Schaltschwelle demnach durch stufenweises, immer wieder geringfügiges Annähern des Referenzwertes an einen vom Wert des Systemparameters in der Ruheposition des Tastelementes abhängigen Wert. Die Erfindung weist den Vorteil auf, daß sie zum einen eine genaue Einstellung der Schaltschwelle zu jeder Zeit gewährleistet. Zum anderen stellt sie sicher, daß in der Regel selbst während des Einstellvorgangs eine gleichzeitige Auslenkung des Tastelementes detektierbar ist.

Weiterhin ist vorgesehen, die Schaltschwelle immer wieder neu einzustellen, solange sich der Tastschalter in Betrieb befindet. Somit werden Verschiebungen der Ruheposition des Tastelementes aufgrund von Verschleiß, Temperatur und Feuchtigkeit während der gesamten Betriebsdauer des Tastschalters ausgeglichen und eine ordnungsgemäße Funktion des Tastschalters zu jeder Zeit gewährleistet. Dabei wird die Schaltschwelle dem Wert des Systemparameters in der Ruheposition des Tastelementes derart nachgeführt, daß die Schaltschwelle nur geringfügig vom Wert des Systemparameters in der Ruheposition des Tastelementes abweicht. Die Schaltschwelle wird aber immer derart eingestellt, daß die ordnungsgemäße Funktion des Tastschalters gewährleistet ist.

Eine bereits eingestellte Schaltschwelle wird vorzugsweise immer dann auf einen neuen Wert eingestellt, falls die bereits eingestellte Schaltschwelle um einen vorgebbaren Betrag vom Wert des Systemparameters in der Ruheposition des Tastelementes abweicht. Der vorgebbare Betrag wird vorzugsweise durch den Abstand bestimmt, der zwischen der Schaltschwelle und dem Wert des Systemparameters in der Ruheposition des Tastelementes vorliegen muß, um eine sichere Funktion des Tastschalters zu gewährleisten.

Die Schaltschwelle bzw. der die Schaltschwelle bestimmende Referenzwert wird hierbei immer nur geringfügig geändert, so daß normalerweise ein Auslenken des Tastelementes aus dessen Ruheposition während der Einstellung bzw. Neueinstellung der Schaltschwelle detektierbar ist. Der Grund dafür ist, daß sich normalerweise der Wert des Systemparameters bei einer Antastung schneller ändert als die erfindungsgemäße stufenweise Nachführung der Schaltschwelle.

Die Neueinstellung der Schaltschwelle erfolgt vorzugsweise immer erst dann, wenn das Tastelement nach einer Auslenkung wieder in seine Ruheposition zurückgekehrt ist. Eine Rückkehr des Tastelementes in seine Ruheposition wird vorzugsweise dann angenommen, wenn der Tastschalter innerhalb eines vorgegebenen Zeitraums, beispielsweise eine Minute, nicht mehr bewegt wurde. Alternativ hierzu kann die Rückkehr des Tastelementes in seine Ruheposition auch durch geeignete Sensoren erfaßt werden. Beispielsweise erfolgt bei dieser alternativen Ausführungsform die Neueinstellung der Schaltschwelle erst nach einem vorgegebenen Zeitraum nach Erfassung der Rückkehr des Tastelementes in die Ruheposition durch die Sensoren.

Bei einer Variante des erfindungsgemäßen Verfahrens wird der Referenzwert bei der Inbetriebnahme des Tastschalters, also beim Einschalten des Tastschalters bzw. Anlegen einer Versorgungsspannung an den Tastschalter, nur solange nachgeführt, bis der Referenzwert den Wert des Systemparameters in der Ruheposition des Tastelementes erreicht oder überschreitet. Anschließend wird die Schaltschwelle aus dem Referenzwert bestimmt. Hierzu ist vorzugsweise vorgesehen, daß der Referenzwert bei Erreichen oder Überschreiten des Wertes des Systemparameters in der Ruheposition des Tastelementes um einen vorgebbaren Wert erhöht wird. Auf diesen erhöhten Referenzwert wird dann die Schaltschwelle eingestellt.

Der vorgebbare, vorzugsweise konstante Wert, um den der Referenzwert erhöht wird, ist hierbei derart gering gewählt, daß die auf den erhöhten Referenzwert eingestellte Schaltschwelle nur geringfügig vom Wert des Systemparameters in der Ruheposition des Tastelementes abweicht. Dies erhöht die Genauigkeit des Tastschalters, so daß selbst eine nur geringfügige Auslenkung des Tastelementes detektierbar ist.

Als Systemparameter wird vorzugsweise eine über einer Detektoranordnung abfallende Spannung gemessen, deren Größe ein Maß für die Bewegung des Tastelementes aus dessen Ruheposition ist. Im Fall, daß die durch die Detektoranordnung gemessene Spannung die Schaltschwelle aufgrund einer Bewegung des Tastelementes aus dessen Ruheposition überschreitet, wird vom Tastschalter ein Schaltsignal erzeugt.

Bei einer weiteren Ausführungsform des erfindungsgemäßen Verfahrens wird ein weiteres Signal vom Tastschalter in dem Fall erzeugt, falls bei der Einstellung der Schaltschwelle ein vorgebbarer Grenzwert der Schaltschwelle überschritten wird. Der Tastschalter wird sodann sofort abgeschaltet, oder es wird ein Alarmsignal an die Folgeelektronik bzw. Auswerteeinheit abgegeben. Dabei ist von Vorteil, daß eine Nachstellung nur innerhalb eines vorgegebenen Einstellbereiches erfolgt, der beispielsweise durch die zulässigen Betriebsbedingungen eingesetzter Bauelemente definiert ist.

Der erfindungsgemäße Schaltkreis zur Einstellung der Schaltschwelle ist durch die Merkmale der Anspruchs 9 charakterisiert. Dieser Schaltkreis ist zur Durchführung des oben beschriebenen Verfahrens geeignet. Hinsichtlich der Vorteile des erfindungsgemäßen Schaltkreises wird auf die obengemachten Ausführungen Bezug genommen.

Nach der Erfindung weist der erfindungsgemäße Schaltkreis eine Einrichtung zur Messung eines Systemparameters in der Ruheposition des Tastelementes auf. Darüber hinaus ist eine elektrische (z.B. digitale) Schaltung zur Ermittlung eines Referenzwertes vorgesehen, aus dem die Schaltschwelle bestimmbar ist. Der erfindungsgemäße Schaltkreis weist ferner Mittel zum stufenweise Nachführen des Referenzwerts an den Wert des Systemparameters in der Ruheposition des Tastelementes auf. Die Schaltschwelle wird aus dem nachgeführten Referenzwert bestimmt.

Nachfolgend wird das erfindungsgemäße Verfahren und der erfindungsgemäße Schaltkreis anhand eines in den Figuren dargestellten Ausführungsbeispiels erläutert.

Es zeigen:
- Figur 1: einen Längsschnitt durch einen Tastschalter zur Positionsbestimmung eines Werkstücks;
- Figur 2: eine schematische Darstellung des Spannungsverlaufs bei Annäherung eines Tastelementes des Tastschalters gemäß Figur 1 an das Werkstück; und
- Figur 3: ein Blockschaltbild eines erfindungsgemäßen Schaltkreises.

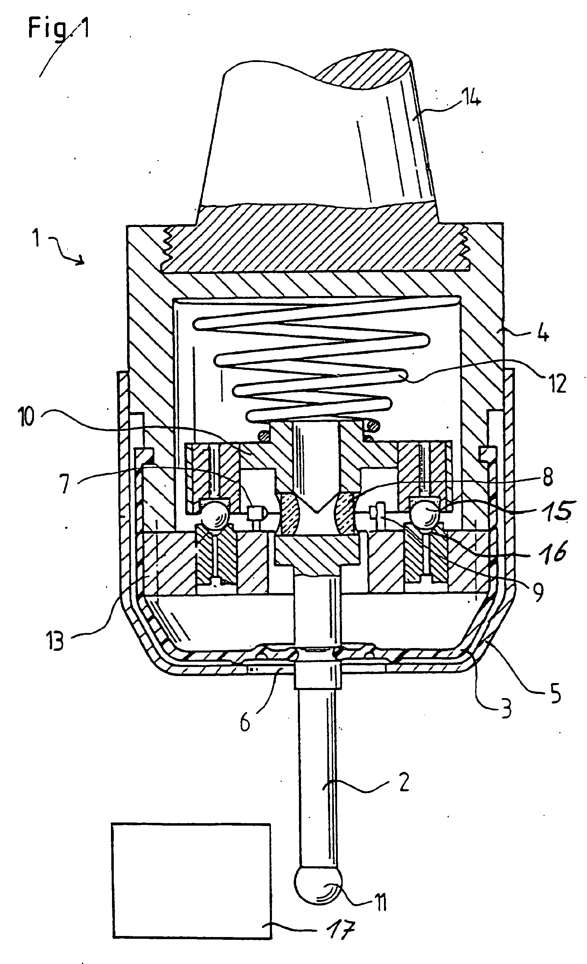

Figur 1 zeigt einen Tastschalter 1, der zur Bestimmung der Position eines in einer Maschine eingespannten Werkstücks 17, beispielsweise eines in einer Fräsmaschine eingespannten Werkstücks 17, verwendet wird. Der Tastschalter 1 ist mittels eines Konus 14 in eine Spindel der Maschine eingesetzt. Um eine feste Verbindung des Tastschalters 1 mit der Spindel zu sichern, ist der Konus 14 an einem Gehäuse 4 des Tastschalters 1 fest angeordnet.

An dem dem Konus 14 gegenüberliegenden Ende des Gehäuses 4 des Tastschalters 1 weist der Tastschalter 1 ein Tastelement in Form eines Taststiftes 2 mit einer Antastkugel 11 auf, der in mehrere Richtungen beweglich im Gehäuse 4 gelagert ist. Der Zwischenraum zwischen dem Gehäuse 4 des Tastschalters 1 und dem Taststift 2 ist durch eine Dichtung 3 verschlossen. Des weiteren ist um den Taststift 2 ein Blechschutz 5 angeordnet, der Beschädigungen der Dichtung 3 durch Späne, die bei der Bearbeitung des Werkstücks 17 entstehen, verhindern soll. In unmittelbarer Nähe zum Taststift 2 weist der Blechschutz 5 eine Öffnung 6 auf, die eine Auslenkung des Taststiftes 2 aus dessen Ruheposition sicherstellt. Die Ruheposition des Taststiftes 2 liegt in der Regel auf der Symmetrieachse des Tastschalters 1, wie in Figur 1 gezeigt.

Der Taststift 2 ist mit einem Tasthalter 10 fest verbunden. Am Tasthalter 10 ist ein Ende einer Druckfeder 12 angeordnet, die mit ihrem anderen Ende am Gehäuse 4 des Tastschalters 1 anliegt. Des weiteren sind Mittel zur Lagerung des Tasthalters 10 am Gehäuseboden 13 des Gehäuses 4 des Tastschalters 1 vorgesehen. Diese Mittel bestehen in der Regel aus mehreren Kugeln 15, die sich in V-Nuten 16 oder Prismen abstützen und eine reproduzierbare Lagerung des Taststiftes 2 am Gehäuseboden 13 gewährleisten. Besonders vorteilhaft ist eine Lagerung mit drei um 120 ° gegeneinander versetzten Kugeln, die ein Dreipunktlager bilden.

Bei Kontakt der Antastkugel 11 des Taststiftes 2 mit dem in der Maschine eingespannten Werkstück 17 wird der Taststift 2 aus dessen Ruheposition ausgelenkt. Diese Auslenkung wird durch eine Detektoranordnung 7 bis 9 erfaßt. Die Detektoranordnung weist hierzu einen feststehenden optischen Sender 7, der als LED ausgebildet ist, sowie ein hierzu ausgerichtetes, ebenfalls feststehendes Differentialphotoelement 9 am Gehäuseboden 13 auf. In der optischen Achse des optischen Senders 7 sowie des Differentialphotoelements 9 ist ein Linsensystem 8 am beweglichen Taststift 2 fest angeordnet. Die Detektoranordnung 7 bis 9 bildet somit ein Lichtschrankensystem.

Bei der Auslenkung des Taststiftes 2 kommt es zu einer Änderung der Intensität des von dem optischen Sender 7 in das Differentialphotoelement 9 einfallenden Lichtes und somit zu einer Änderung einer Ausgangsspannung des Differentialphotoelements 9. Die Änderung der Ausgangsspannung des Differentialphotoelements 9 ist ein Maß für die Auslenkung des Taststiftes 2, so daß ein Kontakt des Taststiftes 2 mit dem Werkstück 17 detektierbar ist.

Genauer führt eine Auslenkung des Taststiftes 2 zu einer Änderung des Ausgangsstroms des Differentialphotoelements 9, aus der mittels eines geeigneten Verstärkers eine meßbare Änderung einer entsprechenden Spannung erzeugt wird. Mit anderen Worten ausgedrückt ist die Änderung der Ausgangspannung ein Abbild der Änderung des Ausgangsstroms und somit auch der Lichtintensität am Differentialphotoelement 9. Dies wird hier verkürzt als Änderung der Ausgangsspannung des Differentialphotoelements 9 aufgrund einer Auslenkung des Taststiftes 2 bezeichnet.

Anstelle der vorstehend beschriebenen optischen Dektoranordnung lassen sich im Zusammenhang mit der vorliegenden Erfindung auch andere Detektoren einsetzen, die z.B. auf magnetischen, iduktiven oder kapazitiven Prinzipien beruhen. Denn die Erfindung bezieht sich auf die Einstellung der Schaltschwelle des Tastschalters 1 und ist daher unabhängig von der Art des verwendeten Detektors.

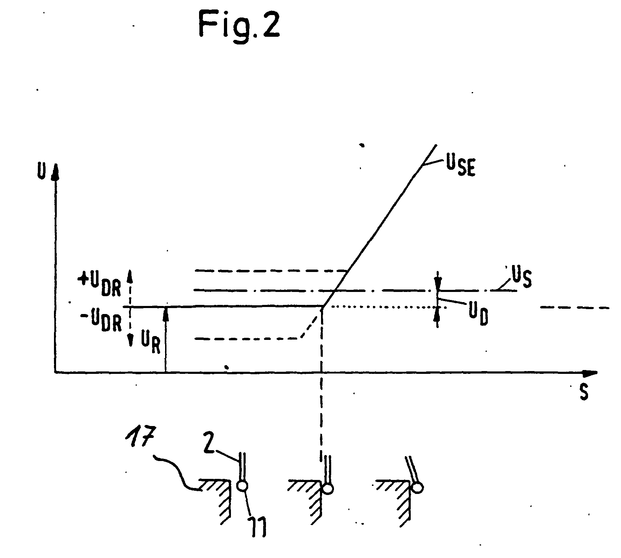

Die Ausgangsspannung und der Antastvorgang sind in Figur 2 dargestellt. Solange der Taststift 2 beim Antastvorgang das Werkstück 17 nicht berührt und nicht aus seiner Ruheposition ausgelenkt wird, ist die Ausgangsspannung U_{SE} des Differentialphotoelements 9 in der Regel konstant und entspricht einer Spannung U_{R}, die nachfolgend Ruhespannung U_{R} genannt wird. Erst bei Auslenkung des Taststiftes 2 aufgrund des Kontaktes der Antastkugel 11 des Taststiftes 2 mit dem Werkstück 17 steigt die Spannung U_{SE} an.

Bei Überschreitung einer Schaltschwelle U_{S} wird durch den Tastschalter 1 ein Schaltsignal erzeugt, das an eine hier nicht weiter dargestellte Auswerteeinheit weitergeleitet wird. Die Schaltschwelle U_{S} ist derart gewählt, daß sie einen um dem Betrag U_{D} größeren Wert als die Ruhespannung U_{R} aufweist. Der Abstands-Betrag U_{D} muß durchaus keine Konstante sein. Wesentlich ist nur, daß U_{D} derart gewählt ist, daß die Schaltschwelle U_{S} über der Ruhespannung U_{R}, also der Ausgangsspannung U_{SE} des Differentialphotoelements 9 in der Ruheposition des Taststiftes 2, liegt, um die ordnungsgemäße Funktion des Tastschalters 1 sicherzustellen.

Es hat sich in der Praxis gezeigt, daß die in Figur 2 dargestellte Ruhespannung U_{R} nicht immer konstant ist. Sie ist - über einen längeren Zeitraum gesehen - einer Drift unterworfen. Ursache hierfür ist, daß der Taststift 2 nach einer Auslenkung nicht immer in die ursprüngliche Ruheposition zurückkehrt, sondern eine davon abweichende Position, also eine neue Ruheposition einnehmen kann. Dies ist durch mechanischen Verschleiß des Tastschalters 1, aber auch durch die Einwirkung von Feuchte und Temperatur auf den Tastschalter 1 bedingt. Aufgrund dessen kommt es in der Ruheposition des Taststiftes 2 zu einer Veränderung der relativen Lage des optischen Sensors 7, des Linsensystems 8 und des Differentialphotoelements 9 zueinander, die zu einer Änderung und somit Drift der Ruhespannung U_{R} führt.

Durch die Drift kann sich die Ruhespannung U_{R} beispielsweise um einen Betrag U_{DR} verringern, (-U_{DR})so daß der Abstand der in der Ruheposition des Taststiftes 2 vorliegenden Ruhespannung U_{R} zur eingestellten Schaltschwelle U_{S} größer wird. Dies hat aber zur Folge, daß die Genauigkeit des Tastschalters 1 verringert wird.

Allerdings ist es auch möglich, daß sich die Ruhespannung U_{R} um den Betrag U_{DR} aufgrund der Drift vergrößert (+U_{DR}), insbesondere um einen Betrag, bei dem die Schaltschwelle U_{S} überschritten wird, so daß eine ordnungsgemäße Funktion des Tastschalters 1 nicht mehr gewährleistet ist.

Durch den nachfolgend beschriebenen erfindungsgemäßen Schaltkreis des Tastschalters 1, an dem das erfindungsgemäße Verfahren näher erläutert wird, wird die Schaltschwelle U_{S} in Abhängigkeit dieser möglichen Drift derart eingestellt, daß eine sichere und ordnungsgemäße Funktion des Tastschalters 1 zu jeder Zeit gewährleistet ist.

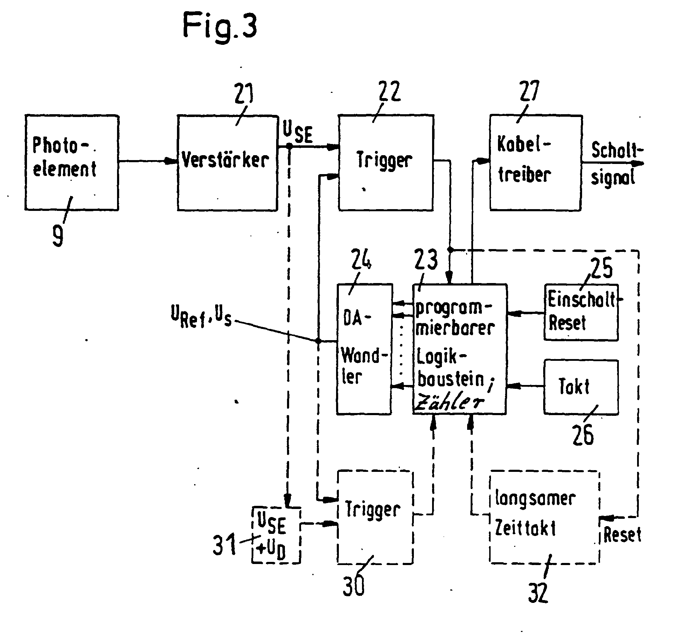

Figur 3 zeigt in einem Blockschaltbild den erfindungsgemäßen Schaltkreis, der im Tastschalter 1 angeordnet ist. Alternativ hierzu ist es auch möglich, den Schaltkreis teilweise oder vollständig außerhalb des Tastschalters 1 anzuordnen. Bei diesem alternativen und nicht dargestellten Ausführungsbeispiel wird die Ausgangsspannung U_{SE} des Differentialphotoelements 9 über geeignete Leitungen zum Schaltkreis geführt.

Der im Tastschalter 1 angeordnete Schaltkreis weist einen Verstärker 21 auf, der mit dem Differentialphotoelement 9 verbunden ist. Der Verstärker 21 erzeugt aus dem Ausgangsstrom des Differentialphotoelements 9 eine hinreichend verstärkte Ausgangsspannung U_{SE} und gibt diese als Eingangssignal auf einen Trigger 22, mit dem der Verstärker 21 verbunden ist. Solange sich der Taststift 2 in dessen Ruheposition befindet, also noch nicht ausgelenkt wurde, entspricht die Ausgangsspannung U_{SE} der Ruhespannung U_{R}, wie in Figur 2 dargestellt.

Der Trigger 22 erhält als weiteres Eingangssignal eine Referenzspannung U_{Ref}, die von einem programmierbaren Logikbaustein 23 bereit gestellt wird. Hierzu ist im Logikbaustein 23 ein Digitalzähler angeordnet, der bei Inbetriebnahme des Tastschalters 1 bzw. Anlegen einer Versorgungsspannung an den Tastschalter 1 ein Reset-Signal durch einen Einschaltreset 25 erhält. In Abhängigkeit eines Taktes 26 wird der Digitalzähler im Logikbaustein 23 schrittweise erhöht und der Zählerstand des Digitalzählers auf einen dem Logikbaustein 23 nachgeschalteten DA-Wandler 24 gegeben, der den Zählerstand in die analoge Referenzspannung U_{Ref} umwandelt, die als Schaltschwelle U_{S} auf den Eingang des Triggers 22 gegeben wird.

Nach jeder Erhöhung der Referenzspannung U_{Ref} wird die Referenzspannung U_{Ref} im Trigger 22 mit der Ruhespannung U_{R} verglichen, die als Ausgangsspannung U_{SE} am Ausgang des Differentialphotoelements 9 anliegt, wenn der Taststift 2 sich in seiner Ruheposition befindet. Wird dabei festgestellt, daß die Referenzspannung U_{Ref} kleiner als die Ruhespannung U_{R} ist, so schaltet der Trigger 22 nicht durch, sondern der Zählerstand des Digitalzählers des Logikbausteins 23 wird mit dem Takt 26 um einen weiteren Zählschritt erhöht. Der erhöhte Zählerstand wird sodann wiederum mittels des DA-Wandlers 24 in eine Referenzspannung U_{Ref} umgewandelt. In anderen Worten ausgedrückt, wird die Referenzspannung U_{Ref} in Stufen erhöht und der Ruhespannung U_{R} nachgeführt.

Allgemein können die der schrittweisen Erhöhung der Referenzspannung zugrundeliegenden Stufen jeweils durch eine vorgebbare Anzahl von Takten eines Taktgebers festgelegt werden. Vorliegend wurde dabei der Einfachheit halber angenommen, daß jedem Takt eine Stufe entspricht; dies ist jedoch nicht zwingend.

Die Erhöhung des Referenzwertes U_{Ref} erfolgt solange, bis der Referenzwert U_{Ref} die Ruhespannung U_{R} erreicht. In diesem Fall schaltet der Trigger 22 ein Ausgangssignal auf seinen Signalausgang und gibt es an den Logikbaustein 23 weiter, dessen Digitalzähler seinen Zählerstand daraufhin um eine vorgegebene Taktzahl weiter erhöht. Nach diesem Erhöhen um ein vorgegebenes Taktintervall ist die dem Zählerstand des Digitalzählers proportionale Spannung U_{Ref} die Schaltschwelle U_{S}, welche am Eingang des Triggers 22 anliegt. Somit entspricht in diesem Zustand die am Eingang des Triggers 22 anliegende Referenzspannung U_{Ref} der Schaltschwelle U_{S}. Nach dem Einstellen der Spannung U_{S} wird ferner vom Logikbaustein 23 ein Signal an einen dem Logikbaustein 23 nachgeschalteten Kabeltreiber 27 (Schnittstelle zu Auswerteeinheit) gegeben, mit dem der nicht dargestellten Auswerteeinheit die Betriebsbereitschaft des Tastschalters 1 angezeigt wird.

Durch den hier beschriebenen Schaltkreis und das beschriebene Verfahren ist es möglich, die Schaltschwelle U_{S} bei Inbetriebnahme des Tastschalters 1 genau zu bestimmen und einzustellen. Bei der Einstellung werden Einflüsse aufgrund des mechanischen Verschleißes und der Alterung des Tastschalters 1 sowie die Einwirkung von Feuchte und Temperatur auf den Tastschalter 1 berücksichtigt, so daß immer eine ordnungsgemäße Funktion des Tastschalters 1 gewährleistet ist.

Eine Auslenkung des Taststiftes 2 wird auf folgende Weise detektiert: Die Ausgangsspannung U_{SE} des Differentialphotoelements 9 wird ständig gemessen und auf den Eingang des Triggers 22 gegeben. Im Trigger 22 wird die Ausgangsspannung U_{SE} mit der ebenfalls auf den Trigger 22 gegebenen Schaltschwelle U_{S} verglichen. Bei einer Auslenkung überschreitet die gemessene Ausgangsspannung U_{SE} des Differentialphotoelements 9 die Schaltschwelle U_{S}, so daß der Trigger 22 durchschaltet. Sodann gibt der Logikbaustein 23 ein Schaltsignal über den Kabeltreiber 27 an die nicht dargestellte Auswerteeinheit.

Der beschriebene Schaltkreis kann auch dazu vorgesehen werden, die vormals eingestellte Schaltschwelle U_{S} während des laufenden Betriebs des Tastschalters 1 immer wieder erneut einzustellen bzw. nachzustellen. Dies ist deshalb erforderlich, da sich bei längerer Betriebsdauer die Ruheposition des Taststiftes aus den oben genannten Gründen verschieben kann, was eine Drift der Ru hespannung U_{R} nach sich zieht. Die hierzu zusätzlich erforderlichen Maßnah men sind in Figur 3 in gestrichelten Linien eingezeichnet.

Bei diesem Ausführungsbeispiel erfolgt die erneute Einstellung der Schaltschwelle U_{S} stets nach Auslenkung und Rückkehr des Taststiftes 2 in dessen Ruheposition, also in die Position, an der der Taststift 2 keinen Kontakt mehr mit dem Werkstück 17 hat. Dabei wird bei dem in Figur 3 dargestellten Ausführungsbeispiel eine Rückkehr des Taststiftes 2 in dessen Ruheposition dann angenommen, wenn innerhalb eines Zeitraums von einer Minute keine Auslenkung des Taststiftes 2 mehr detektiert wurde.

Nach der Rückkehr des Taststiftes 2 in dessen Ruheposition wird der Zählerstand des Digitalzählers des Logikbausteins 23 in langsamen Takten von mindestens einer Minute um einen Zählschritt erhöht oder erniedrigt. Die langsamen Takte werden durch einen langsamen Zeitgeber 32, der dem Logikbaustein 23 vorgeschaltet ist, zur Verfügung gestellt. Der langsame Zeittakt kann auch durch Frequenzteilung vom schnelleren Takt des Taktgebers 26 abgeleitet werden.

Die Richtung des Zählschritts wird durch einen weiteren, dem Logikbaustein 23 vorgeschalteten Trigger 30 bestimmt, dessen erster Eingang mit dem Ausgang des DA-Wandlers 24 verbunden ist und dessen zweiter Eingang mit dem Ausgang eines Addierers 31 verbunden ist. Der Ausgang des Triggers 30 ist wiederum mit dem Logikbaustein 23 verbunden.

Das Ausgangssignal des Addierers 31 entspricht der Summe aus einer aktuell gemessenen Spannung U_{SE}, die als Ausgangsspannung des Differentialphotoelements 9 nach der Rückkehr des Taststiftes 2 in dessen Ruheposition anliegt, und aus einem vorgegebenen, vorzugsweise abgespeicherten Spannungswert U_{D}, der den Mindestabstand der Schaltschwelle U_{S} von der Ruhespannung U_{R} in der Ruheposition des Taststiftes 2 wiedergibt. Dieser Mindestabstand U_{D} ist notwendig, um eine ordnungsgemäße Funktion des Tastschalters 1 zu gewährleisten, wie anhand von Figur 2 bereits erläutert.

Das Ausgangssignal des Addierers 31 wird im Trigger 30 mit dem Ausgangssignal des DA-Wandlers 24, also der bereits aus dem Referenzwert U_{Ref} bestimmten Schaltschwelle U_{S} verglichen.

Sollte das Ausgangssignal des Addierers 31 höher sein als die eingestellte Schaltschwelle U_{S}, dann ist die Ruhespannung U_{R} nach oben gedriftet. Der Zählerstand des Digitalzählers des Logikbausteins 23 wird dann um einen Zählschritt erhöht. Sollte das Ausgangssignal des Addierers 31 allerdings kleiner als die Schaltschwelle U_{S} sein, so ist die Ruhespannung U_{R} nach unten gedriftet. Der Zählerstand wird dann um einen Zählschritt erniedrigt. Der Trigger 30 gibt also die erforderliche Zählrichtung des Zählers im Logikbaustein 23 an, um die Takte des Taktgebers 32 vorzeichenrichtig zu zählen, damit der Drift entgegengewirkt wird.

Die nach der Erhöhung oder Erniedrigung des Zählerstandes vom DA-Wandler 24 ausgegebene, den Zählerstand des Digitalzählers des Logikbausteins 23 wiedergebende Spannung wird als neue Schaltschwelle U_{S} auf den Eingang des Triggers 22 gegeben und zur Bestimmung einer Auslenkung des Taststiftes 2 aus dessen Ruheposition verwendet.

Die hier beschriebene Ausführungsform der Erfindung gewährleistet, daß selbst bei einer Drift der Ruhespannung U_{R} die Schaltschwelle U_{S} immer derart eingestellt wird, daß eine ordnungsgemäße Funktion des Tastschalters 1 zu jeder Zeit sichergestellt ist. Des weiteren ist von Vorteil, daß die Änderungen der Schaltschwelle U_{S} während des Betriebs des Tastschalters 1 nur in geringen, vorgebbaren Stufen erfolgt, so daß selbst während des Einstellens einer neuen Schaltschwelle eine gleichzeitige Auslenkung des Taststiftes 2 aus dessen Ruheposition detektierbar ist. Die Änderung der Schaltschwelle U_{S} erfolgt dabei durch die beiden Parameter Taktfrequenz des Taktgebers 32 und Änderungsbetrag der Spannung U_{Ref} pro Takt so langsam, daß in der Regel immer eine Auslenkung des Taststiftes 2 detektierbar bleibt.

Es ist von Vorteil, wenn ein Alarmsignal an die Folgeelektronik abgegeben wird, wenn die Schaltschwelle U_{S} vorgegebene Grenzwerte überschreitet. Das Alarmsignal gibt dabei an, daß eine unzulässige Drift und somit Verlagerung der Bauelemente 15, 16, 7, 8, 9 erfolgt ist.

## Patentansprüche

1. Verfahren zur Einstellung einer Schaltschwelle (U_{S}) eines Tastschalters (1), der ein aus einer Ruheposition auslenkbares Tastelement (2) aufweist und der bei einer Auslenkung des Tastelementes (2) aus seiner Ruheposition eine definierte Änderung eines meßbaren Systemparameters (U_{SE}) bewirkt und ein Schaltsignal abgibt, wenn der Wert des Systemparameters (U_{SE}) die Schaltschwelle (U_{S}) überschreitet, wobei die Schaltschwelle (U_{S}) auf einen von dem Wert des Systemparameters (U_{SE}) in der Ruheposition des Tastelementes (2) abhängigen Wert eingestellt wird, **dadurch gekennzeichnet, daß** die Schaltschwelle (U_{S}) aus einem in Stufen veränderbaren Referenzwert (U_{Ref}) bestimmt wird, der zu vorgebbaren Zeitpunkten mit dem Wert des Systemparameters (U_{R}, U_{SE}) in der Ruheposition des Tastelementes (2) verglichen und um jeweils eine Stufe diesem Wert des Systemparameters (U_{R}, U_{Se}) nachgeführt wird, wenn der Referenzwert (U_{Ref}) von diesem Wert des Systemparameters (U_{R}, U_{SE}) abweicht, wobei eine bereits eingestellte Schaltschwelle (U_{S}) neu eingestellt wird, während sich der Tastschalter im Betrieb befindet, falls die Schaltschwelle (U_{S}) um einen vorgebbaren Betrag vom Wert des Systemparameters (U_{R}, U_{SE}) in der Ruheposition des Tastelementes (1) abweicht.

2. Verfahren nach Anspruch 1, **dadurch gekennzeichnet, daß** beim Einschalten des Tastschalters (1) der Referenzwert (U_{Ref}) solange stufenweise nachgeführt wird, bis der Referenzwert (U_{Ref}) den Wert des Systemparameters (U_{R}, U_{SE}) in der Ruheposition des Tastelementes (2) erreicht hat.

3. Verfahren nach Anspruch 2, **dadurch gekennzeichnet, daß** der Referenzwert (U_{Ref}) bei Erreichen oder Überschreiten des Wertes des Systemparameters (U_{R}, U_{SE}) in der Ruheposition des Tastelementes (2) um einen vorgebbaren Wert (U_{D}) erhöht wird und daß die Schaltschwelle (U_{S}) auf den erhöhten Referenzwert (U_{Ref}) eingestellt wird.

4. Verfahren nach Anspruch 3, **dadurch gekennzeichnet, daß** der vorgebbare Wert (U_{D}) eine Konstante ist.

5. Verfahren nach einem der vorangehenden Ansprüche, **dadurch gekennzeichnet, daß** der die Schaltschwelle (U_{S}) bestimmende Referenzwert (U_{Ref}) derart geringfügig und langsam stufenweise geändert wird, daß ein Auslenken des Tastelementes (2) aus dessen Ruheposition während der Einstellung der Schaltschwelle (U_{S}) detektierbar ist.

6. Verfahren nach einem der vorangehenden Ansprüche, **dadurch gekennzeichnet, daß** die Schaltschwelle (U_{S}) dann eingestellt wird, wenn das Tastelement (2) innerhalb eines vorgebbaren Zeitraums nicht aus seiner Ruheposition ausgelenkt wurde.

7. Verfahren nach einem der vorangehenden Ansprüche, **dadurch gekennzeichnet, daß** als Systemparameter (U_{SE}) eine über einer Detektoranordnung (7, 8, 9) des Tastschalters (1) abfallende Spannung gemessen wird.

8. Verfahren nach einem der vorangehenden Ansprüche, **dadurch gekennzeichnet, daß** der Tastschalter (1) abgeschaltet oder ein Warnsignal erzeugt wird, falls bei der Einstellung der Schaltschwelle (U_{S}) ein vorgebbarer Grenzwert des Systemparameters (U_{SE}) überschritten wird.

9. Schaltkreis zur Einstellung einer Schaltschwelle (U_{S}) eines Tastschalters (1), der ein aus einer Ruheposition auslenkbares Tastelement (2) aufweist und der bei einer Auslenkung des Tastelementes (2) aus seiner Ruheposition eine definierte Änderung eines meßbaren Systemparameters (U_{SE}) bewirkt und ein Schaltsignal abgibt, wenn der Wert des Systemparameters (U_{SE}) die Schaltschwelle (U_{S}) überschreitet, zur Durchführung des Verfahrens nach einem der vorangehenden Ansprüche, mit
- einer Einrichtung zur Messung des Systemparameters (U_{R}, U_{SE}) in der Ruheposition des Tastelementes (1),
- einer elektrischen Schaltung (23, 24) zur Ermittlung eines Referenzwertes (U_{Ref}), aus dem die Schaltschwelle (U_{S}) bestimmbar ist, sowie mit
- Mitteln zum stufenweisen Nachführen des Referenzwertes (U_{Ref}) an den Wert des Systemparameters (U_{R}, U_{SE}) in der Ruheposition des Tastelementes (2), wobei die Schaltschwelle (U_{S}) aus dem Referenzwert (U_{Ref}) bestimmbar ist und wobei eine bereits eingestellte Schaltschwelle (Uₛ) neu einstellbar ist, während sich der Tastschalter im Betrieb befindet, falls die Schaltschwelle (Uₛ) um einen vorgebbaren Betrag vom Wert des Systemparameters (U_{R}, U_{SE}) in der Ruheposition des Tastelementes (1) abweicht.

## Claims

1. A method for setting a selector shaft (Uₛ) of a push button (1), which encompasses a contact element (2) which can be moved from an idle position and which causes a defined change of a measurable system parameter (U_{SE}) in response to a movement of the contact element (2) from its idle position and which emits a switching signal when the value of the system parameter (U_{SE}) exceeds the selector shaft (Uₛ), wherein the selector shaft (Uₛ) is set to a value, which is a function of the value of the system parameter (U_{SE}) in the idle position of the contact element (2), **characterized in that** the selector shaft (Uₛ) is determined from a reference value (U_{Ref}), which can be changed in stages and which is compared to the value of the system parameter (U_{R}, U_{SE}) in the idle position of the contact element (2) at presettable times and which is updated to this value of the system parameter (U_{R}, U_{SE}) by one stage in each case when the reference value (U_{Ref}) deviates from this value of the system parameter (U_{R}, U_{SE}), wherein an already set selector shaft (Uₛ) is reset while the push button is in operation in the event that the selector shaft (Uₛ) deviates by a presettable amount from the value of the system parameter (U_{R}, U_{SE}) in the idle position of the contact element (1).

2. The method according to claim 1, **characterized in that** the reference value (U_{Ref}) is updated in stages in response to the turn-on procedure of the push button (1) until the reference value (U_{Ref}) has reached the value of the system parameter (U_{R}, U_{SE}) in the idle position of the contact element (2).

3. The method according to claim 2, **characterized in that** the reference value (U_{Ref}) is increased by a presettable value (U_{D}) when the value of the system parameter (U_{R}, U_{SE}) in the idle position of the contact element (2) has been reached or exceeded and that the selector shaft (Uₛ) is set to the increased reference value (U_{Ref}).

4. The method according to claim 3, **characterized in that** the presettable value (U_{D}) is a constant.

5. The method according to one of the preceding claims, **characterized in that** the reference value (U_{Ref}), which defines the selector shaft (Uₛ), is changed slightly and slowly in stages in such a manner that a movement of the contact element (2) from the idle position thereof can be detected during the setting process of the selector shaft (Us).

6. The method according to one of the preceding claims, **characterized in that** the selector shaft (Uₛ) is set when the contact element (2) has not been moved from its idle position within a presettable period.

7. The method according to one of the preceding claims, **characterized in that** a voltage, which drops across a detector configuration (7, 8, 9) of the push button (1), is measured as system parameter (U_{SE}).

8. The method according to one of the preceding claims, **characterized in that** the push button (1) is turned off or that a warning signal is generated in the event that a presettable threshold value of the system parameter (U_{SE}) is exceeded in response to the setting of the selector shaft (Uₛ).

9. A circuit for setting a selector shaft (Uₛ) of a push button (1)., which encompasses a contact element (2) which can be moved from an idle position and which causes a defined change of a measurable system parameter (U_{SE}) in response to a movement of the contact element (2) from its idle position and which emits a switching signal when the value of the system parameter (U_{SE}) exceeds the selector shaft (Uₛ) for carrying out the method according to one of the preceding claims, comprising
- a device for measuring the system parameter (U_{R}, U_{SE}) in the idle position of the contact element (1),
- an electric circuit (23, 24) for determining a reference value (U_{Ref}) from which the selector shaft (Uₛ) can be determined as well as comprising
- means for updating the reference value (U_{Ref}) in stages to the value of the system parameter (U_{R}, U_{SE}) in the idle position of the contact element (2), wherein the selector shaft (Uₛ) can be determined from the reference value (U_{Ref}) and wherein an already set selector shaft (Uₛ) can be reset while the push button is in operation in the event that the selector shaft (Uₛ) deviates by a presettable amount from the value of the system parameter (U_{R}, U_{SE}) in the idle position of the contact element (1).

## Revendications

1. Procédé pour le réglage d'un seuil de commutation (U_{S}) d'un interrupteur à touche (1) comportant un élément à touche (2) apte à être dévié hors d'une position de repos, et produisant un changement défini d'un paramètre de système (U_{SE}) mesurable lors d'une déviation de l'élément à touche (2) hors de sa position de repos, tout en émettant un signal de commutation, lorsque la valeur du paramètre de système (U_{SE}) dépasse le seuil de commutation (Uₛ), le seuil de commutation (Uₛ) étant réglé à une valeur dépendant de la valeur du paramètre de système (U_{SE}) dans la position de repos de l'élément à touche (2), **caractérisé en ce** le seuil de commutation (U_{S}) est déterminé à partir d'une valeur de référence (U_{Ref}) modifiable par paliers, qui est comparée avec la valeur du paramètre de système (U_{R}, U_{SE}) dans la position de repos de l'élément à touche (2) à des instants fixés, et actualisée à chaque fois d'un palier par rapport à cette valeur de paramètre de système (U_{R}, U_{SE}), lorsque la valeur de référence (U_{Ref}) s'écarte de cette valeur de paramètre de système (U_{R}, U_{SE}), un seuil de commutation (U_{S}) déjà réglé étant réglé à nouveau, pendant que l'interrupteur à touche est en marche, dans le cas où le seuil de commutation (U_{S}) s'écarterait d'un montant fixable à l'avance par rapport à la valeur du paramètre de système (U_{R}, U_{SE}) dans la position de repos de l'élément à touche (1).

2. Procédé selon la revendication 1, **caractérisé en ce que** lors de l'activation de l'interrupteur à touche (1), la valeur de référence (U_{Ref}) est actualisée par paliers jusqu'à ce que la valeur de référence (U_{Ref}) ait atteint la valeur de paramètre de système (U_{R}, U_{SE}) dans la position de repos de l'élément à touche (2).

3. Procédé selon la revendication 2, **caractérisé en ce que** la valeur de référence (U_{Ref}) est augmentée d'une valeur fixable à l'avance (U_{D}) lors de l'atteinte ou du dépassement de la valeur du paramètre de système (U_{R}, U_{SE}) dans la position de repos de l'élément à touche (2), et **en ce que** le seuil de commutation (Uₛ) est réglé à la valeur de référence augmentée (U_{Ref}).

4. Procédé selon la revendication 3, **caractérisé en ce que** la valeur fixable à l'avance (U_{D}) est une constante.

5. Procédé selon l'une des revendications précédentes, **caractérisé en ce que** la valeur de référence (U_{Ref}) déterminant le seuil de commutation (Uₛ) est faiblement et lentement modifiée par paliers de telle manière, qu'une déviation de l'élément à touche (2) hors de sa position de repos pendant le réglage du seuil de commutation (Uₛ) peut être détectée.

6. Procédé selon l'une des revendications précédentes, **caractérisé en ce que** le seuil de commutation (Uₛ) est réglé lorsque l'élément à touche (2) n'a pas été dévié hors de sa position de repos en l'espace d'un laps de temps fixable à l'avance.

7. Procédé selon l'une des revendications précédentes, **caractérisé en ce qu'**une tension en chute est mesurée par un ensemble de détecteurs (7, 8, 9) de l'interrupteur à touche (1) en tant que paramètre de système (U_{SE}).

8. Procédé selon l'une des revendications précédentes, **caractérisé en ce que** l'interrupteur à touche (1) est désactivé ou un signal d'alerte est produit, en cas de dépassement d'une valeur seuil du paramètre de système (U_{SE}), fixable à l'avance, lors du réglage du seuil de commutation (U_{S}).

9. Circuit de commutation pour le réglage d'un seuil de commutation (Uₛ) d'un interrupteur à touche (1), comportant un élément à touche (2) apte à être dévié hors d'une position de repos, et produisant un changement défini d'un paramètre de système (U_{SE}) mesurable lors d'une déviation de l'élément à touche (2) hors de sa position de repos, tout en émettant un signal de commutation, lorsque la valeur du paramètre de système (U_{SE}) dépasse le seuil de commutation (Uₛ), pour la mise en oeuvre du procédé selon l'une des revendications précédentes, avec
- un dispositif pour le mesurage du paramètre de système (U_{R}, U_{SE}) dans la position de repos de l'élément à touche (1),
- un circuit électrique (23, 24) pour l'obtention d'une valeur de référence (U_{Ref}), à partir de laquelle le seuil de commutation (Uₛ) peut être déterminé, ainsi qu'avec
- des moyens pour l'actualisation par paliers de la valeur de référence (U_{Ref}) par rapport à la valeur du paramètre de système (U_{R}, U_{SE}) dans la position de repos de l'élément à touche (2), le seuil de commutation (Uₛ) pouvant être déterminé à partir de la valeur de référence (U_{Ref}), et un seuil de commutation (U_{S}) déjà réglé pouvant être réglé à nouveau, pendant que l'interrupteur à touche est en marche, dans le cas où le seuil de commutation (U_{S}) s'écarterait d'un montant fixable à l'avance par rapport à la valeur du paramètre de système (U_{R}, U_{SE}) dans la position de repos de l'élément à touche (1).
